# EUROPEAN PATENT SPECIFICATION

(11) **EP 4 077 244 B1**
(45) Date of publication and mention of the grant of the patent: **13.03.2024**
(21) Application number: 20821261.3
(22) Date of filing: 15.12.2020
(51) Int. Cl.: C05F 11/02, C05G 3/40, C05G 5/12

(54) **USE OF GRANULAR PYROLYTIC CARBON FOR SOIL CONDITIONING**
VERWENDUNG VON KÖRNIGEM PYROLYSE-KOHLENSTOFF ZUR BODENKONDITIONIERUNG
UTILISATION DE CARBONE PYROLYTIQUE GRANULAIRE POUR L'AMENDEMENT DU SOL

(30) Priority: 17.12.2019 EP 19217079
(43) Date of publication of application: 26.10.2022
(73) Proprietor: BASF SE, 67056 Ludwigshafen am Rhein (DE)
(72) Inventor: HEINDL, Maximilian, 67117 Limburgerhof (DE); FLICK, Dieter, 67056 Ludwigshafen (DE); SCHEIFF, Frederik, 67056 Ludwigshafen (DE); WISSEMEIER, Alexander, 67117 Limburgerhof (DE); PREUSS, Rainer, 67117 Limburgerhof (DE); BODE, Andreas, 68259 Mannheim (DE)
(74) Representative: BASF IP Association
(86) International application number: PCT/EP2020/086074
(87) International publication number: WO 2021/122503

(56) References cited:
- WO-A1-2018/108681
- US-A1- 2013 312 472
- US-A1- 2019 002 764
- US-B1- 8 361 186

## Description

The present invention comprises the use of granular pyrolytic carbon having a density of 1.6 to 2.3 g/cc, a specific surface area of 0.001 to 5 m2/g, a particle size of 0.3 mm d10 to 8 mm d90 and a carbon content of 95 to 100 weight-% for soil conditioning, e.g. to promote growth of plants, to promote soil drainage and to prevent erosion, evaporation, capping, crusting and silting up. The pyrolytic carbon is preferably used as a mulch.

Soil is the most important production factor for the farmers and thus, a central task for the farmer is therefore to prevent erosion, evaporation and silting up. Mulch is currently used to combat erosion, evaporation, weed control and humus depletion. Plant remains of a catch crop or the straw from the previous crop is typically used as mulch.

The disadvantage of mulch is that the organic mass binds active ingredients such as herbicides and thus reduces their effect. Mulch sowing is also time-consuming and cost intensive.

In addition to mulch sowing, sometimes compost is spread on the fields. Depending on the type of compost, there may be a foul odor that lasts for days.

US 2,877,599 discloses that carbon black having a high volume for its weight could be incorporated in the soil to darken the soil and improve heating from solar radiation and absorption and retention of water. US 2,877,599 discloses that the carbon black is so light and fluffy (aggregate size 85-500 nm, agglomerates 1-100 µm, density 1.7-1.9 g /cm3), in a sense being highly volatile, that it cannot be deposited directly on the ground. Merely dropping it causes a substantial percentage of the carbon black to "evaporate" into the air, while the remainder of it is rapidly carried away or drifted by the wind. US 2,877,599 sums up that it is practically impossible to add carbon black directly to the soil. Therefore, US 2,877,599 discloses a soil conditioner in compact pellet form wherein the carbon black comprises 5 to 40 %, preferably 10 to 20 %, gypsum up to 50 %, binder up to 1 % and organic fibrous material up to 95%, e.g. sludge from sewage processing plants, waste liquor from paper mills or humus. The soil conditioner would be spread on the soil in quantity ranging from 90 kg (200 pounds) to two tons per 0.405 ha (1 acre). It is desirable that the soil conditioner should work into the ground to a depth of 50.8 mm (two inches) over a period of two years. The pellets have a diameter and length in the range from 6.4 to 4.8 mm (1/4 to 3/16 of an inch).

US 3,345,773 discloses the use of carbonaceous solids having a diameter of 2.03 mm to 12.70 mm (0.08 inch to 0.5 inch) as mulch to promote germination and growth of plants by warming the soil, preventing crusting of the soil and by retaining moisture in the soil. Various useful carbon solids are described, for example coal, e.g. lignites, anthracites and bitumen coals and coke derived from coals and from petroleum. Carbon solid is defined to include solids composed chiefly of carbon having less than about 25 weight percent volatile matter and obtained from coal or petroleum sources. The mulch is applied on the solid to provide a layer above the seeds having a thickness of 3.18 mm to 38.1 mm (0.125 inch to 1.5 inch).

Preferably, the carbonaceous solids are mixed with water impermeable material to provide a water barrier.

US 3,341,318 discloses a mulch composition containing lignin sulfonate compositions, a byproduct of the paper industry, carbon black and water. These mulch compositions provide increased soil temperatures, thus assuring better germination of crop seeds and earlier emergence and earlier maturity, conserve soil moisture, reduce windblown soil loss, spray easily without clogging applicator nozzles and are non-corrosive to application equipment. The carbon black can optionally be omitted from the mulch if this is employed for herbicidal effects primarily.

JP 9310068 concerns a soil conditioner comprising carbon material having a high specific surface area of 30 - 500 m/g composed of combustion residues of waste rubber products.

Carbon sources of unknown composition i.e. carbon containing waste material are potentially hazardous as they may contain components that are environmentally harmful or toxic. Environment protective regulations require that soil additives e.g. soil conditioners are safe and do not add pollutive agents to the soil.

In view of the unknown components using waste material, WO 2012/15313 discloses a system for a manufacturing of a soil conditioner wherein a gaseous hydrocarbon source is fed to plasma cracking unit, and the produced plasma carbon is fed to a unit wherein the plasma carbon is mixed with a substrate, to produce a carbon enriched soil conditioner. The substrate to be mixed with carbon can be different soil types like sand, clay or organic waste. It is disclosed that plasma carbon with small nodule sizes (<100nm) has several advantages as soil conditioner since it absorbs UV radiation and thus provides protection for microorganisms which are vital for the good growth conditions in soils that are exposed to strong solar radiation. WO 2012/15313 discloses that the large surface area of 50 to 1000 m²/g is important for improving the water retention properties and thus preventing dehydration of the soil. Beside the disadvantage of the effort for pelleting the carbon black, WO 2012/15313 discloses that carbon black based substrates have a continuing tendency to dust formation. However, dust enhance erosion and humus depletion and environment protective regulations require that soil additives are used in a dust-bounded form.

Although, the use of carbon as soil conditioner has a long history in literature, no widespread use is known.

Recently, biochar is disclosed as a promising soil conditioner in view of humus depletion, climate change and waste organic management.

There are mainly three benefits claimed for biochar: Soil enhancement, N2O reduction and C-Sequestration. The large surface areas of biochar could lead to a long-term water storage, the functional groups could bind nutrient and the black color could improve soil warming. The change in physical habitats in the spoil could lead to alterations of microbial community and suppress N2O emissions. The polycyclic aromatics of the biochar degrade more slowly than the original biomass being a carbon sink.

But a majority of recent studies showed only small or insignificant effects on crop yield (Martin Bach, Burkhard Wilske & Lutz Breuer (2016): Current economic obstacles to biochar use in agriculture and climate change mitigation, Carbon Management, DOI: 10.1080/17583004.2016.1213608; Steffens (2019), Kohlenstoff in den Boden bringen. Lumbrico 3, 36-39; Borchard, N., Siemens, J., Ladd, B., Möller, A., Amelung, W. (2014) Application of bio-chars to sandy and silty soil failed to increase maize yield under common agricultural practice. Soil and Tillage Research 144, 184 - 194).

The average cost of biochar is at present about 400 EUR per ton. Using about 10 t/ha the profits from the increase in yield are estimated to be 1 to 10 EUR per ton per year. With an estimated median of 20 years for the biochar half-life, a large-scale application of biochar in agriculture is not profitable yet (see Bach, Müll und Abfall (2017); BUND (2015), Terra Preta / Pyrolysekohle - BUND Einschatzung ihrer Umweltrelevanz). In addition, it is questionable whether the biochar potentially available per year would fulfill market demand.

Thus, considering the current cost of biochar, the economic viability of biochar cannot recommend its general use in agricultural crop production. In addition, the conversion process of biomass into pyrolysis biochar must also be critically evaluated with regard to the pollutant content in the product (especially PAH).

US 2013/312472 discloses a composition comprising pyrolyzed biomass that is utilized for soil amendment. Said pyrolyzed biomass can comprise more than 95 wt.-% of carbon and can be a granular composition with a particle size of 1 mm. It is mentioned in US 2013/312472 that owing to the high porosity, the biochar accumulates nutrients and microorganisms, such that the plants grow even in highly porous soils. The BET surface is analyzed for wood, straw, green waste and algae and determined to be in the range of 20 to 200 m2/g at pyrolysis temperature of 600-750°C.

US 8 361 186 discloses that biomass material can be pyrolyzed and such granular pyrolytic carbon can be used as a soil conditioner. The carbon content is disclosed to be in the range from 10 to 99.5 wt.-% and the surface area in the range of 1 to 5000 m2/g.

US 2019/002764 also disclose the use of pyrolyzed and surface-oxygenated biochar with optimized hydrophilicity as a soil conditioning substrate. The substrate is in a granular from having a particle size of up to 3 mm, the carbon content is in the range of 65 to 75 wt.-% and the surface area is in the range of 0.1 to 800 m2/g.

Kathrin Weber and Peter Quicker analyzed many biochar samples in Fuel 217 (2018)240-261. The carbon content is in the range of 50 to 95 weight-%, the density of the biochar is in the range of 0.4 to 0.75 g/cc, the bulk density is about 0.3 g/cc and the BET is in the range of 1 to 700 m2/g and the total pore volume is in the range of 1 to 4.8 cm3/g, all parameters depending on the temperature of the pyrolyze.

A common method for promoting seed germination and plant growth is the use of covering black foils. The disadvantages are well known: no waterinfiltration, using of microplastic, cost- and time-consuming method, affecting the landscape adversely.

In addition to the challenges of erosion and evaporation of the soil, water infiltration and capping is a major challenge in view of the increasing risk of heavy rains due to climate changes. Capping means the displacement of soil particles at the soil surface by raindrops or generally by water movement. By drop impact (hail, heavy rain, continuous rain, irrigation) the soil aggregates are more or less mechanically crushed and fine particles or single grains are removed. The consequences of capping are: (i) Levelling; this leads to accelerated surface runoff, (ii) Closure of soil pores; this leads to a reduction in water absorption (infiltration) and (iii) Crust formation after drying; this hinders the penetration of germinating plants through the soil surface.

It is an object of the present invention to provide a process for promoting plant growth.

It is a further object of the present invention to provide a process for promoting plant growth by reducing the erosion by wind and/or rain.

It is a further object of the present invention to provide a process for promoting plant growth by reducing the moisture loss to the atmosphere and thereby provide a high moisture content in the soil.

In addition, it is a further object of the present invention to provide a process for promoting plant growth by increasing the radiant heat absorptivity of a seed bed, by less need for irrigation, by reducing the risk of capping, crusting, silting up and/or by suppression of weed growth.

It is a further object of the present invention to provide a soil conditioner that is dustless or even dust free, odorless and able to interim outside storage.

It is a further object of the present invention to provide a soil conditioner that is easy to handle and apply allowing a precise dosing due to a tight particle size distribution.

It is a further object of the present invention to provide a soil conditioner that is free of pollutive agents and even in large quantities not harmful to soil and plants.

It is a further object of the present invention to provide a carbon-containing soil conditioner that is not biodegradable and thus not emitting carbon dioxide.

It is a further object of the present invention to provide an alternative soil conditioner to biochar that is available at a reasonable price and in a sufficient amount to fulfill market demands.

The present invention provides a soil conditioning substrate containing granular pyrolytic carbon having a density of 1.6 to 2.3 g/cc, a specific surface area of 0.001 to 5 m2/g, a particle size of 0.3 mm d10 to 8 mm d90 and a carbon content of 95 to 100 weight-%.

This particle size is of the same size as fine gravel (typically 2 to 6 mm) or coarse sand (typically 0.5 to 2 mm).

The present invention provides a method to promote growth of plants in soil, according to claim 9.

The present invention also provides the direct use of granular pyrolytic carbon without any pelleting process as soil conditioner for agricultural land and/or gardening, according to claim 12. Preferably, granular pyrolytic carbon is used in addition to mulch seeds.

### Pyrolytic carbon:

The word "pyrolytic carbon" covers solid carbon produced from pyrolysis of light hydrocarbons in absence of oxygen (see for example Muradov, Nazim. "Low to near-zero CO2 production of hydrogen from fossil fuels: Status and perspectives." International Journal of Hydrogen Energy 42.20 (2017): 14058-14088). The preferred granular pyrolytic carbon is a high density solid elemental carbon produced by deposition on carbon granules. This is preferred to thermal black produced by thermal/plasma processes or nanostructured carbon grown on metal/oxide catalysts.

The pyrolytic carbon can be produced by decomposition of gaseous hydrocarbon compounds, preferably the decomposition of methane, and carbon deposition on suitable underlying substrates (carbon materials, metals, ceramics and a mixture thereof), preferably at temperatures ranging from 1000 to 2500 K and at pressures ranging from 0.5 - 5000 kPa (abs). The substrate can either be porous or non-porous and can be either be a support substrate in the reactor (a pre-installed part) or a granular and powderish material. In case of using a support containing catalytic active metals, such metals are preferred that have positive or no interaction to the seed germination and plant growth and can remain in the soil like iron. The preferred substrate is a carbon-containing substrate, being pyrolytic carbon, which means carbon derived from oxygen-free thermal decomposition of hydrocarbons in presence of a carboneous deposition substrate at temperatures > 1000 °C. The particle size of the support substrate is in the range of 0.3 to 8 mm, preferably 0.5 to 5 mm, more preferably 1 to 4 mm. The decomposition can either be realized as fixed bed, moving bed, fluidized bed or entrained flow. The production of pyrolytic carbon is not limited to a specific energy supply, fossil-fired, electrically heated or plasma-driven production reactors are possible.

A wide range of microstructures, e.g. isotropic, lamellar, substrate-nucleated and a varied content of remaining hydrogen, can occur in pyrolytic carbons, depending on the deposition conditions (temperature, type, concentration and flow rate of the source gas, surface area of the underlying substrate, etc.).

The density of the pyrolytic carbon is in the range of 1.6 to 2.3 g/cc, preferably 1.8 to 2.2 g/cc, more preferably 1.9 to 2.15 g/cc (real density in xylene, ISO 8004). Typically, the bulk density of the pyrolytic carbon is in the range of 0.5 to 1.5 g/cc, preferably 0.6 to 1.3 g/cc, more preferably 0.7 to 1.1 g/cc.

The carbon content of the pyrolytic carbon is in the range of 95 to 100 weight-%, preferably 98 to 100 weight-%, more preferably 99 to 100 weight-%, even more preferably 99.5 to 100 weight-%, even more 99.75 to 100 weight-%, even more 99.9 to 100 weight-%. Typically, the impurities of the pyrolytic carbon are: S in the range of 0 to 1 weight-%, preferably 0 to 0.5 weight-%, more preferably 0 to 0.1 weight-%. Fe in the range of 0 to 1000 ppm, preferably 0 to 500 ppm, Ni in the range of 0 to 250 ppm, preferably 0 to 100 ppm, V in the range of 0 to 450 ppm, preferably 0 to 250 ppm, more preferably 0 to 100 ppm. Na in the range of 0 to 200 ppm, preferably 0 to 100 ppm. Oxygen is in the range of 0 to 100 ppm, preferably below the detection limit.

The particle size of the granular pyrolytic carbon directly resulting of the decomposition of gaseous hydrocarbon compounds is in the range of 0.3 mm d10 to 8 mm d90, preferably 0.5 mm (d10) to 5 mm (d90), more preferably 1 mm (d10) to 4 mm (d90).

The fraction of particle size under 0.1 mm, preferably under 10 µm, more preferably under 5 µm being at most 20 ppm by weight, more preferably being at most 10 ppm by weight. The fraction of particle size under 0.1 mm, preferably under 10 µm, more preferably under 5 µm being in the range of 0 to 20 ppm by weight, preferably 0 to 10 ppm by weight.

Optionally, the granular pyrolytic carbon directly resulting of the decomposition of gaseous hydrocarbon compounds can be classified to a desired particle size or a desired particle size distribution if needed for specific agricultural applications. Multi-surface classifier are commonly used for such kind of separation/classifying processes.

Typically, the crystal size (XRD) of the pyrolytic carbon is in the range of 20 to 60 Å, preferably 30 to 50 Å, (XRD, ISO 20203).

Typically, the porosity of the pyrolytic carbon granule is between 0% to 15%, preferably 0.2 % to 10%, most preferably 0.2% to 5% (Hg porosimetry, DIN66133).

The specific surface area of the pyrolytic carbon measured by Hg porosimetry (DIN66133) is in the range of 0.001 to 5 m2/g, more preferably 0.01 to 2 m2/q, even more preferably 0.05 to 2 m2/g.

The pyrolytic carbon is preferably a hydrophobic material with a preferred contact angle of water droplets of greater than 70, preferably greater than 80, more preferably greater than 90.

Typically, the granular pyrolytic carbon produced by decomposition of gaseous hydrocarbon compounds and carbon deposition on suitable underlying substrates does not tend to form dust. Preferably, the granular pyrolytic carbon produced by decomposition of gaseous hydrocarbon compounds and carbon deposition on suitable underlying substrates can directly be used as soil conditioner. Preferably, there is no need for any pelleting step. Preferably, there is no need to add any binder, filler etc.

### Spreading of the granular pyrolytic carbon:

The soil conditioner could be spread or applied on the agricultural field (soil) in quantity ranging from 0.5 to 500 tons per ha, preferably 2 to 200 tons per ha, more preferably 5 to 20 tons per ha.

The thickness of the soil conditioner layer, preferably overlying the seed bed, can vary according to the prevailing planting conditions such as the moisture content of the soil, type of plants being planted, etc.

Generally, a thickness of the soil conditioner layer between 0.5 mm and 50 mm can be used; preferably between 1 mm and 20 mm, most preferably, between 5 mm and 15 mm.

Due to this granulate form, the soil conditioner can be easily applied and worked into the soil. The soil conditioner can be deposited in a well-known spreader, e.g. fertilizer spreader, and pushed/pulled by hand or drawn by a tractor. Optionally the soil conditioner is worked into the topsoil layer with soil tillage equipment, alternatively the soil conditioner is left on the soil surface.

Optionally, the present soil conditioning substrate could be applied as a layer over the soil bevor the seed has been planted of after that. The benefit of the application after the seed has been planted is the avoidance of disrupting the granular pyrolytic carbon layer by subsequent seeding operations.

The soil conditioner can be applied as a single layer over the entire seed bed, or alternatively, it can be applied as a narrow band covering only the seeded row. In another embodiment, the soil conditioner can be applied as periodic or discontinuous bands over the seed row to facilitate thinning operations.

Optionally, the soil conditioning substrate can be mixed with other commonly used soil conditioning substrates like fertilizer, liming material, commonly known soil improver, growing medium, inhibitor and/or plant biostimulant as regulated by the Regulations (EU) 2019/1009 and applied as a mixture. Optionally, the particle size of the soil conditioning substrate can be adapted to the co-conditioning substrate, e.g. via classifying.

Optionally, the present soil conditioning substrate can support different organic or inorganic additives, e.g. agrochemical active substance from the group of fungicides, bactericides, herbicides and/or plant growth regulators.

### Advantages:

A soil conditioner has now been found that is dust free, odorless, easy to handle and apply. The carbon produced via decomposition of gaseous hydrocarbon compounds can directly be used as a soil conditioner without any pelleting step.

The present soil conditioner can be used as a mulch, a top layer, and does not have to be worked into the soil.

In addition, the carbon containing soil conditioner can remain in the soil without being converted into carbon dioxide.

In addition, the present soil conditioner reduces the erosion of soil by wind. Furthermore, the present soil conditioner used as mulch reduces moisture loss from the soil to the atmosphere and thereby preserves a high moisture content in the soil. Although disclosed in WO 2012/15313, this effect of preserving a high moisture content in the soil could not be measured with carbon black as soil conditioner with the same application rate (e.g. 16 t/ha).

The present soil conditioner shows good water infiltration and capping properties as well as a good hydraulic conductivity of soil.

The present soil conditioner can fulfill the market demand. A small scale hydrogen production plant produces typically 10.000 Nm3/h hydrogen using a methane pyrolysis 21.400 t/a pyrolytic carbon will be produced as co-product, a medium scale hydrogen plant produces typically 50.000 Nm3/h, thus 107000 t/a pyrolytic carbon as co-product and a large scale hydrogen plant produces typically 100.000 Nm3/h, thus 214.000 t/a pyrolytic carbon as co-product.

### Example:

### 1 Comparison of pyrolytic carbon and Biochar

### Characteristics:

In the experiments, granular pyrolytic carbon and Biochar were tested:

**Table 1: Characteristic of the granular pyrolytic carbon and Biochar**

| | granular pyrolytic carbon | Biochar 1 | Biochar 2 | Biochar 3 | Biochar 4 |
|---|---|---|---|---|---|
| Biochar | | Made from Spruce wood (Prodana GmbH) | Made from Root of vine (Hochschule Geisenheim University) | Made from Green cutting (Hochschule Geisenheim University) | Made from Wheat straw (Hochschule Geisenheim University) |
| Carbon content | 98 wt.-% | 86 wt.-% | ** | -** | ** |
| Particle size | 1.5 - 2.0 mm | 1-2 mm | -** | -** | 1-2 mm |
| BET | <0.05 m2/g | 58.9 m2/g | ** | ** | 113 m2/g |
| Langmuir surface | 0.13 m2/g | 82.1 m2/g | ** | ** | 156 m2/g |
| Density | 1.93 ±0.03 g/cc | < 1* g/ cc | 1.13 ± 0.01 g/ cc | 0.95 ± 0.13 g/ cc | < 1 g/ cc |
| Bulk Density | 1.28 g/ cc | 0.227 g/ cc | ** | ** | 0.187 g/ cc |

| | | | | | |
|---|---|---|---|---|---|
| * floating on the surface, even if the solution contained a wetting agent ** no data available yet | | | | | |

The granular pyrolytic carbon was produced by decomposition of natural gas and deposition on calcined petroleum coke carrier material (the carrier having a particle size of 0.5-2.5 mm, a sulfur content of 1.1 wt.-% and a real density in xylene of 2.09 g/cm3) in a fluidized bed at temperatures from 1100-1300 °C and at pressures from 1-2 bar(abs).

### BET: measured as described in DIN ISO 9277

Density: The specific weight (density) was determined by the Archimedes principle in pure water (see Wikipedia). Part of the experiments were done in water amended with a wetting agent to lower the surface tension of the water so that also hydrophobic particles may sink into the water if the specific weight is ≥ 1 g/cc.

Bulk Density: ASTM C559 "Standard test method for bulk density by physical measurement of manufactured carbon and graphite articles"

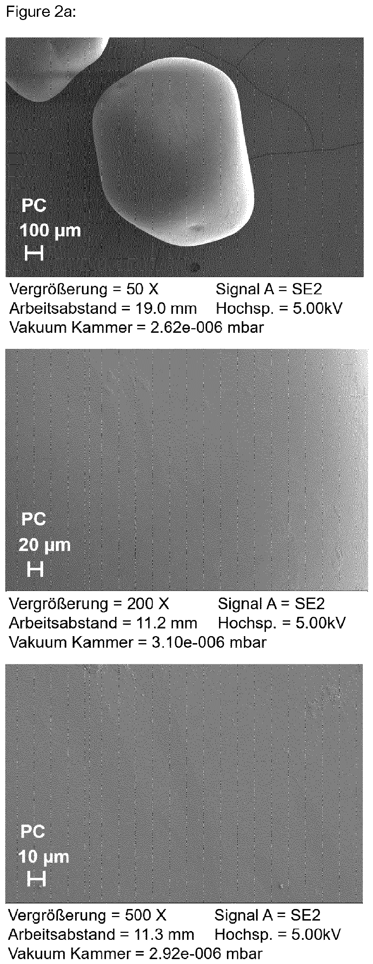

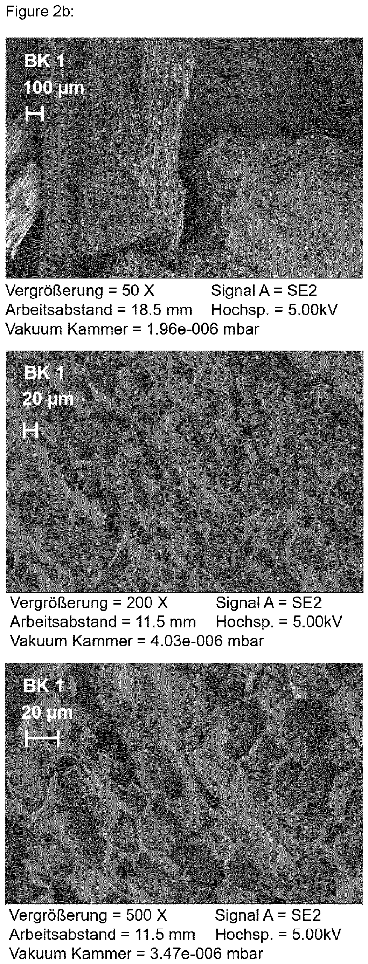

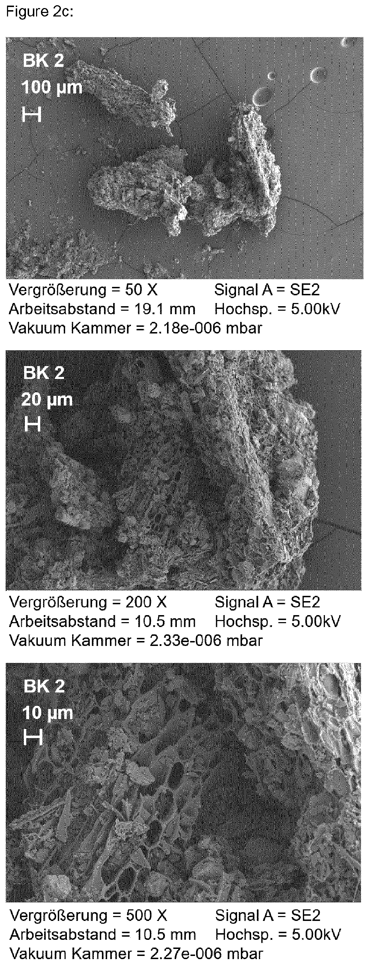

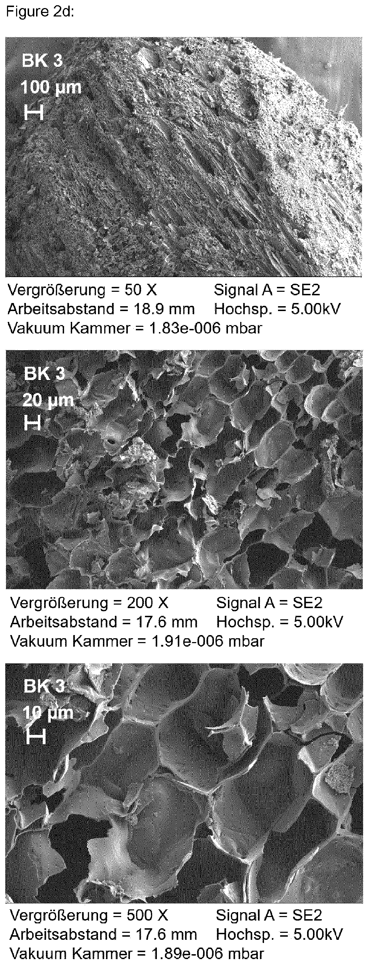

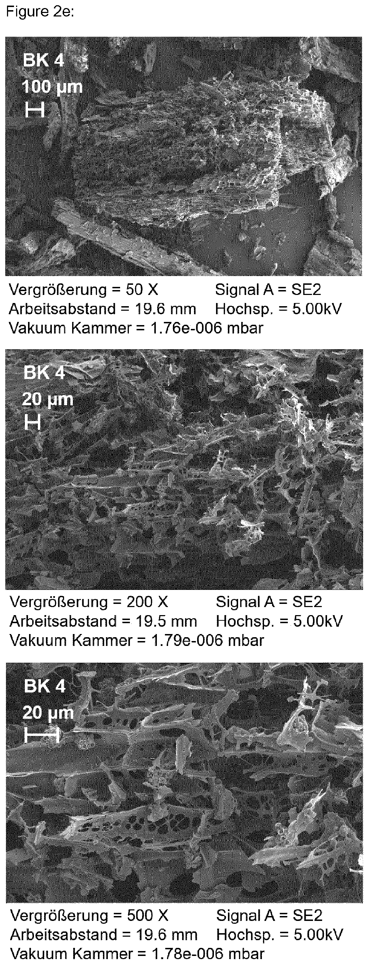

### SEM (see Figure 2):

Pyrolytic carbon and biochar samples were spattered with platinum vapor and photographed with a Zeiss Gemini SEM 500 scanning electron microscope.

### 2 Wind erosion

Experimental set-up: Installation of a wind tunnel with a gradient of different wind speeds from 0 km/h to 7 km/h (measured with Lechler Pocketwind IV Hand Aerometer, which was placed on inverted Petri dishes, on which the materials (pyrolytic carbon, carbon black, Biochar 1, Biochar 4 at dry conditions) were also applied).

### 2.1 Wind speed

The inverted petri dishes, on which 1.5 g of material was placed, was placed in the wind tunnel and the wind speed was increased.

**Table 2: Wind speed from which the first particles were blown away from the petri dishes**

| | Wind speed |
|---|---|
| Pyrolytic carbon | 5.5 km/h |
| Carbon black | 3.6 km/h |
| Biochar 1 | 1.6 km/h |
| Biochar 4 | 1.4 km/h |

### 2.2 Loss of material

The inverted petri dishes, on which 1.5 g of material was placed, was placed in the wind tunnel at a wind speed of 6.4 km/h. After 5 min of wind exposure, the material remained on the petri dishes was weighed.

**Table 3: Material remained on the petri dishes after 5 min wind exposure**

| | Material remained on the petri dishes [g] | Material remained on the petri dishes [%] |
|---|---|---|
| Pyrolytic carbon | 1.49 g | 99 % |
| Carbon black | 1.38 g | 93 % |
| Biochar 1 | 0.58 g | 39 % |
| Biochar 4 | 0.54 g | 36% |

Covering the topsoil with pyrolytic carbon or carbon black reduces the erosion effects by wind due to the high density and low surface area. Biochar having a low density and a structured surface with a high surface area provides more contact surface for the wind under dry conditions.

### 3 Comparison of pyrolytic carbon and carbon black

### Characteristics:

In the experiments, granular pyrolytic carbon and carbon black were tested:

**Table 4: Characteristic of the granular pyrolytic carbon and carbon black**

| | granular pyrolytic carbon | Carbon black (Cancarb Thermax N990 ultra pur) |
|---|---|---|
| Carbon content | 98 wt.-% | >95 wt.% |
| Particle size | 1.5 - 2.0 mm | 280 nm |
| BET | <0.05 m2/g | 10.3 m2/g |
| Langmuir surface | 0.13 m2/g | 15 m2/g |
| Density | 1.98 g/cc | 1.7-1.9 g/ cc |

The granular pyrolytic carbon was produced by decomposition of natural gas and deposition on calcined petroleum coke carrier material (having a particle size of 0.5-2.5 mm, a sulfur content of 1.1 wt.-% and a real density in xylene of 2.09 g/cm3) in a fluidized bed at temperatures from 1100-1300 °C and at pressures from 100-200 kPa (1-2 bar) (abs).

### 3.1 Formation of biomass:

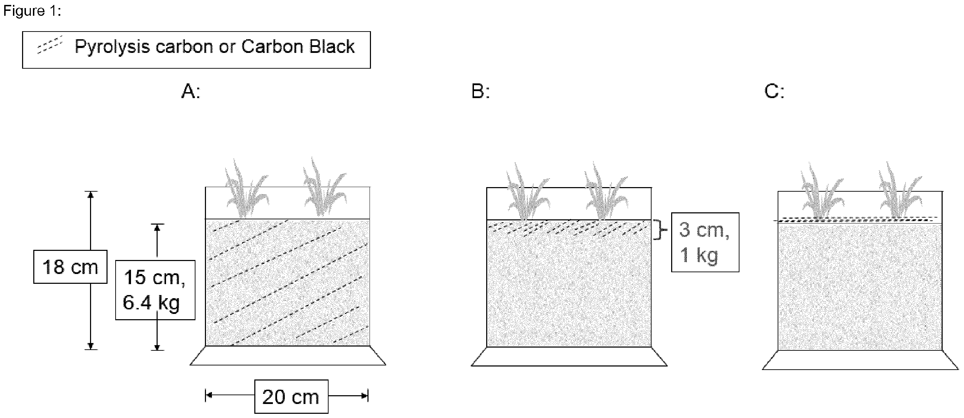

### Application (see Figure 1) and testing Methods

### Pot Trial with maize:

Soil Limburgerhof (loamy sand, pH 6.8) was used in "Mitscherlich pots" filled with 6.4 kg dry soil each pot. As a basal fertilization each pot received 99 mg Mg as MgSO₄ and 0.436 g P, and 1.1 g K as K₂HPO₄, and 1 g N as NH₄NO₃.

The carbon samples were either uniformly mixed with the soil (Application, treatment A), uniformly mixed with 1 kg of soil which was placed on top of the other unamended 5.4 kg of soil (Application B), or the carbon samples were placed on top of the soil after the maize plants had emerged nine days after seeding (Application C), see Fig. 1.

With 314 cm² soil surface per pot 2, 4, 8, 16 t C/ha equals 6.3, 12.5, 25, 50 g C/pot, respectively.

Six seeds of Zea *mays* (L.) cv. "Amadeo" were seeded per pot (5. June 2019). After emergence plants were first thinned to uniformly three plants per pot and later to one plant per pot, which then was cultivated until maturity. As a second dress the pots were fertilized with 1 g N as NH₄NO₃ and finally as a third dress each pot received 6.7 g of the complex fertilizer Nitrophoska^{®} perfect (15+5+20S+2+8+ trace elements) on June 28.

Each Carbon treatment had 4 replicates, so that the untreated control had all in all 8 replicates. The pots were placed fully randomized on a conveyor table in the Vegetation hall Limburgerhof and were exposed from seeding until harvest to natural irradiation and temperature The function and features of the Vegetation hall Limburgerhof has been described by Jung (1967).

From Monday to Friday the pots were watered two times a day semi-automatically after weighing to 70% of the maximum water holding capacity of the soil. (The differences in weight of the pots due to the addition of the carbon samples were taken into account by extra weight.) On Saturday and Sunday pots were watered twice a day horticulturally according to need without weighing.

The harvest took place on October 2nd by dividing the shoot into the cob and the rest of the plant so that both total dry matter (Tab. 5) and cob dry matter (Tab. 6) could be determined after drying the plant biomass in a forced oven at 80°C until constant weight.
Application A: uniform mixing with the whole soil of the plant pot (0-15 cm, 6.4 kg soil)
Application B: uniform mixing with the top soil only (0-3 cm, 1 kg soil)
Application C: mulch on top of the soil, 9 days after emergence of plants.

### 3.1.1 Application (see Figure 1) and testing Methods

Figure 1: The treatment of soil with two carbon forms (pyrolytic carbon, carbon black) applied at different rates and at different locations.

### 3.1.2 Comparison of test results

**Table 5: Total shoot dry matter per maize plant and pot in gram as mean of n replicates, ±standard deviation and as percentage of untreated control = 100%. For the distribution of both pyrolytic carbon (Pyro-C) and carbon black ("application") see Figure 1. "-" indicate no treatment. Statistics (one-way ANOVA): n.s. = no significant difference between means of control and treatment, (+) = different with P <0.1, * = significantly different with P <0.05, ** with P <0.01, *** with P <0.001.**

| Application | Control | Pyro-C (2 t/ha) | Pyro-C (4 t/ha) | Pyro-C (8 t/ha) | Pyro-C (16 t/ha) | Carbon black (2 t/ha) | Carbon black (4 t/ha) | Carbon black (8 t/ha) | Carbon black (16 t/ha) |
|---|---|---|---|---|---|---|---|---|---|
| A | 105.2 ±5.9 (n = 8) | 113.8± 15.3 (n = 4) | 105.3± 7.5 (n = 4) | 113.3± 13.6 (n = 4) | 114.4± 15.9 (n = 4) | 113.2± 4.1 (n = 4) | 117.6± 5.3 (n = 4) | 115.7± 13.2 (n = 4) | 116.4± 4.7 (n=4) |
| | (100%) | (108%) n.s. | (100%) n.s | (108%) n.s. | (109%) n.s | (108%) * | (112%) ** | (110%) n.s. | (110%) ** |
| | | 117.7±12.7 (n=16) (106%) * | | | | 115.7±7.2 (n=16) (110%) ** | | | |
| B | 105.2 ±5.9 (n = 8) | - | 109.2± 11.8 (n = 4) | 118.5± 7.1 (n = 4) | 111.9± 13.5 (n = 4) | - | 108.0± 13.8 (n = 4) | 110.51 5.5 (n = 4) | 102.0± 6.6 (n = 4) |
| | (100%) | | (104%) n. s. | (113%) ** | (106%) n.s. | | (103%) n.s. | (105) n.s. | (97%) n.s. |
| | | - | 113.2 ±10.9 (n = 12) (108%) n.s. (+) | | | - | 106.8 ±9.3 (n = 12) (101%) n.s. | | |
| C | 105.2 ±5.9 (n = 8) | - | - | 125.5± 6.0 (n = 4) | 113.1± 10.3 (n = 4) | - | - | - | 104.3± 13.0 (n = 4) |
| | (100%) | | | (119%) *** | (107%) n.s. | | | | (99%) n.s. |

**Table 6: Maize-cob dry matter per maize plant and pot in gram as mean of n replicates, ±standard deviation and as percentage of untreated control = 100%. For the distribution of both pyrolytic carbon (Pyro-C) and carbon black ("application") see Figure 1. "-" indicate no treatment. Statistics (one-way ANOVA): n.s. = no significant difference between means of control and treatment, (+) = different with P <0.1, * = significantly different with P <0.05, ** with P <0.01, *** with P <0.001 .**

| Application | Control | Pyro-C (2 t/ha) | Pyro-C (4 t/ha) | Pyro-C (8 t/ha) | Pyro-C (16 t/ha) | Carbon black (2 t/ha) | Carbon black (4 t/ha) | Carbon black (8 t/ha) | Carbon black (16 t/ha) |
|---|---|---|---|---|---|---|---|---|---|
| A | 67.2 ±5.0 (n = 8) | 72.8 ±14.0 (n = 4) | 68.3 ±4.8 (n = 4) | 70.7 ±12.8 (n = 4) | 76.1 ±10.3 (n = 4) | 74.6 ±2.5 (n = 4) | 79.4 ±3.6 (n = 4) | 77.8 ±9.6 (n = 4) | 76.9 ±3.8 (n=4) |
| | (100%) | (108%) n.s. | (102%) n.s. | (105%) n.s. | (113%) n.s. (+) | (111%) * | (118%) ** | (116%) * | (111%) ** |
| | | 70.0±10.3 (n=16) (107%) n.s. | | | | 77.2±5.3 (n=16) (115%) *** | | | |
| B | 67.2 ±5.0 (n = 8) | - | 72.7 ±9.5 (n = 4) | 78.9 ±5.0 (n = 4) | 73.5 ±12.1 (n = 4) | - | 70.6 ±7.2 (n = 4) | 75.0 ±4.2 (n = 4) | 67.0 ±6.2 (n = 4) |
| | (100%) | | (108%) n.s. | (117%) ** | (109%) n.s. | | (105%) n.s. | (112) * | (100%) n.s. |
| | | - | 75.0 ±8.9 (n = 12) (112%) * | | | - | 70.9 ±6.4 (n = 12) (106%) n.s. | | |
| C | 67.2 ±5.0 (n = 8) | - | - | 83.7 ±5.2 (n = 4) | 73.2 ±8.6 (n = 4) | - | - | - | 66.9 ±8.8 (n = 4) |
| | (100%) | | | (123%) *** | (107%) n.s. | | | | (98%) n.s. |

Both the addition of pyrolytic carbon and of carbon black on average increased the biomass production of maize in the range of an equivalent to 2 up to 16 t per ha (Tab. 5 and 6). The only exception is the highest application rate of carbon black (16 t/ha) applied only to the uppermost topsoil or on top of the soil after emergence of plants (Application B and C). In this case either no increase in dry matter could be observed or on average some reduction in growth occurred. On the contrary application of pyrolytic carbon on top of the soil after emergence of plants at rates of 8 or 16 t/ha increased both the total dry weight of the shoots by an average of 13% (Tab. 5) as well the maize-cob dry matter by 17% (Tab.6), which were statistically significant for both parameters (not shown).

On average and by statically means carbon black was somewhat more growth promoting than granular pyrolytic carbon over the range of application rates when uniformly distributed into the soil (Application A). The picture changes when the two carbon sources were concentrated in the uppermost 3 cm of the soil (Application B) or placed on top of the soil (Application C). In these cases on average and by statistical means pyrolytic carbon were superior to carbon black.

### 3.3 Biodegradability:

The biodegradability was tested by measuring the soil respiration after addition of pyrolytic carbon and carbon black at an application rate of 313 mg per 50 g soil (soil Limburgerhof; loamy sand, pH 6.8) what is equivalent to some 2 t C/ha. Soil without additions or with the addition of 50 mg ground wheat straw to 50 g soil (0.32 t/ha) were controls. The soil respiration was measured with WTW OxiTop (Weilheim, Germany) placed in incubators at 20 °C according to the method outlined by Robertz et al. (1999) and Malkomes and Lemnitzer (2009).

In Tab. 7 the straw caused a strong soil respiration while neither pyrolytic Carbon (granular or ground) nor carbon black caused any CO₂ evolution higher than the unamended soil. (The pyrolytic carbon was ground with a mortar and pistil by hand until by naked eye hardly any granules could be seen.) The tendencies in differences in soil respiration among the carbon forms or in comparison the untreated soil was at no time statistically significant (not shown).

**Tab. 7: Soil respiration (CO₂ emission) of soil Limburgerhof cumulated over time at 20°C without or with addition of straw or the carbon sources Pyrolytic carbon and carbon black; MW = mean value, n = 4, ±SD = standard deviation.**

| Incubation time [weeks] | Soil without C addition | | Straw ground (0.32 t C/ha) | | Granular pyrolytic carbon (2 t/ha) | | Grounded pyrolytic carbon (2 t/ha) | | Carbon black (2 t/ha) | |
|---|---|---|---|---|---|---|---|---|---|---|
| | Soil respiration [mg CO₂-C/50 g dry soil, cumulated] | | | | | | | | | |
| | MW | ±*SD* | MW | ±*SD* | MW | ±*SD* | WM | ±*SD* | MW | ±*SD* |
| 1 | 0.7 | *0.2* | 19.1 | *0.7* | 1.0 | *0.2* | 1.0 | *0.2* | 0.8 | *0.2* |
| 2 | 1.5 | *0.3* | 26.3 | *0.8* | 1.6 | *0.4* | 1.9 | *0.4* | 1.7 | *0.3* |
| 3 | 2.4 | *0.3* | 29.5 | *0.8* | 2.5 | *0.5* | 2.8 | *0.4* | 2.6 | *0.3* |
| 4 | 3.1 | *0.4* | 31.7 | *0.8* | 3.1 | *0.4* | 3.4 | *0.4* | 3.3 | *0.4* |
| 5 | 3.7 | *0.4* | 33.4 | *0.8* | 3.8 | *0.4* | 4.1 | *0.5* | 4.0 | *0.4* |
| 6 | 4.3 | *0.4* | 34.7 | *0.8* | 4.2 | *0.6* | 4.6 | *0.6* | 4.5 | *0.5* |
| 7 | 4.9 | *0.5* | 35.0 | *0.3* | 4.8 | *0.6* | 5.3 | *0.6* | 5.2 | *0.5* |
| 8 | 5.5 | *0.5* | 35.4 | *0.2* | 5.3 | *0.6* | 5.8 | *0.7* | 5.8 | *0.6* |
| 9 | 6.0 | *0.5* | 35.7 | *0.2* | 5.8 | *0.6* | 6.3 | *0.7* | 6.3 | *0.6* |
| 10 | 6.4 | *0.6* | 36.4 | *0.2* | 6.3 | *0.6* | 6.7 | *0.8* | 6.8 | *0.6* |
| 11 | 7.0 | *0.6* | 36.9 | *0.2* | 6.7 | *0.6* | 7.2 | *0.8* | 7.3 | *0.7* |
| 12 | 7.4 | *0.6* | 37.2 | *0.3* | 7.1 | *0.6* | 7.6 | *0.8* | 7.7 | *0.7* |
| 13 | 7.8 | *0.6* | 37.5 | *0.4* | 7.5 | *0.6* | 7.9 | *0.8* | 8.1 | *0.7* |
| 14 | 8.4 | *0.6* | 37.5 | *0.7* | 8.5 | *0.6* | 9.0 | *0.8* | 8.7 | *0.7* |
| 15 | 8.9 | *0.6* | 38.6 | *0.9* | 8.9 | *0.6* | 9.4 | *0.9* | 9.2 | *0.7* |
| 16 | 9.4 | *0.6* | 39.6 | *1.0* | 9.4 | *0.6* | 9.9 | *0.9* | 9.6 | *0.8* |
| 17 | 9.9 | *0.6* | 40.5 | *1.1* | 9.8 | *0.6* | 10.3 | *0.9* | 10.1 | *0.7* |

### 3.4 Tendency of dust formation:

The tendency of dust formation was measured by the Heubach Test Method (DIN 55992). 100 g of urea-fertilizer in prilled from (state of the art), a granular pyrolytic carbon and carbon black were compared:

**Table 8: Dust Formation**

| | Dust formation (g) | Dust (g) / 100 kg soil conditioner |
|---|---|---|
| Urea-fertilizer | 0.0006 | 0.6 |
| Granular pyrolytic carbon | 0.0002 | 0.2 |
| Carbon black | 0.01 | 10 |

The well-known dust formation of prilled urea served as a control. It could be seen that compared to urea pyrolytic carbon showed only some 30% of dust formation, while carbon black a more than 15 times higher dust formation as urea as measured by the Heubach Test method.

### 3.5 Ability of water storage

500 g air-dry soil Limburgerhof (Texture: Sand 73%, silt 24%, clay 3%, pH in CaCl₂ 6.8) was moistened with 110 ml demineralized water and covered with 16 t/ha (7,07 g) pyrolytic carbon or carbon black in a beaker with an inner diameter of 7.5 cm performing at 21-22°C, 40-50% rel. humidity. Each treatment was replicated three times.

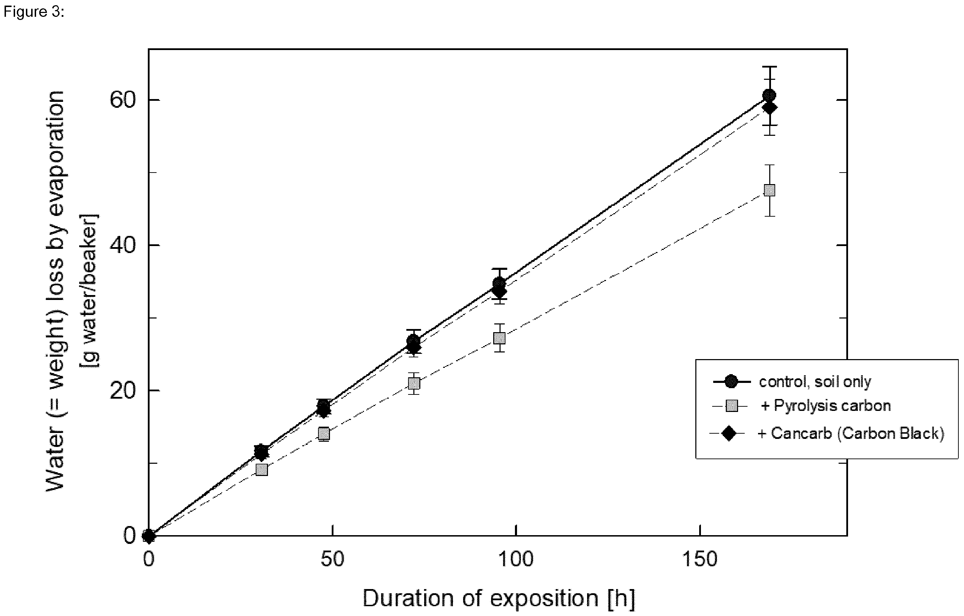

**Table 9: Quantity of evaporation (in g/beaker, 44.1 cm2), see Figure 3**

| | 30.5 h ±SD | 47.5 h ±SD | 72 h ±SD | 95.5 h ±SD | 169 h ±SD |
|---|---|---|---|---|---|
| Control, soil without any cover | 11.76 ± 0.76 | 17.83 ± 1.04 | 26.77 ± 1.64 | 34.70 ± 2.08 | 60.59 ± 4.00 |
| Soil with pyrolytic carbon cover | 9.16 ± 0.66 | 14.02 ± 0.94 | 21.00 ± 1.50 | 27.23 ± 1.92 | 47.58 ± 3.56 |
| Soil with carbon black cover | 11.27 ± 0.64 | 17.23 ± 0.88 | 25.96 ± 1.37 | 33.69 ± 1.77 | 59.02 ± 3.84 |

**Table 10: Water loss rate**

| | Water loss rate [ml/h] | Averaged water loss in relation to the control experiment without any cover (set to 100 %) |
|---|---|---|
| Control, soil without any cover | 8.60 | 100 % |
| Soil with pyrolytic carbon cover | 6.76 | 79 % |
| Soil with carbon black cover | 8.38 | 97 % |

Table 9 and 10 show that the moisture loss to the atmosphere can be reduced by covering the topsoil with pyrolytic carbon and thereby provide a high moisture content in the soil, whereas carbon black does not reduce the moisture loss significantly. The consequence of this effect is a higher water content in the soil due to a mulch layer of pyrolytic carbon which then is available for more plant growth.

### 3.6 Ability of water absorption

At the beginning, the samples were dried down. The air humidity was gradually increased from 0% - 90% in 10% steps, whereas the criterion for next stage was the mass fluctuation <0.05% in 45min.

**Table 11: Water absorption**

| Sample | Water absorption [wt.-%] | Start value rel. air humidity | Duration | End value rel. air humidity | Temperature |
|---|---|---|---|---|---|
| Carbon black | 0.031% | 0% | 147h | 70% | 25°C |
| Biochar 1 | 7.25% | 0% | 147h | 70% | 25°C |
| Biochar 4 | 12.5% | 0% | 147h | 70% | 25°C |
| Pyrolytic carbon | 0.0023% | 0% | 147h | 70% | 25°C |

Table 11 shows the low water absorption of carbon black and pyrolytic carbon compared to biochar due to the low surface area and the hydrophobic surface.

### References

Jung, J. (1967): Eine neue Vegetationshalle zur Durchführung von Gefäßversuchen. Z. Acker- u. Pflanzenb. 126, 293-297.
Malkomes, H.-P., Lemnitzer, B. (2009): "Vergleich der mittels URAS und OxiTop Control gemessenen Substrat-induzierten Kurzzeitatmung im Boden beim mikrobiologisch-ökotoxikologischen Monitoring von Pflanzenschutzmitteln. I. Einfluss eines Herbiziden Referenzmittels und eines Neutralsalzes", Nachrichtenblatt Deutscher Pflanzenschutzdienst, 60, 104-112.
Robertz, M., Muckenheim, Th., Eckl, S., Webb, L. (1999): "Kostengunstige Labormethode zur Bestimmung der mikrobiellen Bodenatmung nach DIN 19737", Wasser & Boden, 51/5, 48-53.

## Claims

1. Soil conditioning substrate containing granular pyrolytic carbon having a density of 1.6 to 2.3 g/cc, a specific surface area of 0.001 to 5 m2/g measured by Hg porosimetry, a particle size of 0.3 mm d10 to 8 mm d90 and a carbon content of 95 to 100 weight-%.

2. Soil conditioning substrate according to claim 1, wherein the granular pyrolytic carbon has a density of 1.8 to 2.2 g/cc.

3. Soil conditioning substrate according to claim 1 or 2, wherein the granular pyrolytic carbon has a specific surface area in the range of 0.01 to 2 m2/g measured by Hg porosimetry.

4. Soil conditioning substrate according to at least one of claims 1 to 3, wherein the granular pyrolytic carbon has a bulk density of 0.5 to 1.5 g/cc.

5. Soil conditioning substrate according to at least one of claims 1 to 4, wherein the fraction of particle size under 5 µm, being at most 10 ppm by weight.

6. Soil conditioning substrate according to at least one of claims 1 to 5, wherein the granular pyrolytic carbon is a hydrophobic material with a contact angle of water droplets of greater than 70.

7. Soil conditioning substrate according to at least one of claims 1 to 6, wherein the substrate supports different organic or inorganic additives, e.g. agrochemical active substance from the group of fungicides, bactericides, herbicides and/or plant growth regulators.

8. Soil conditioning substrate according to at least one of claims 1 to 7 containing mulch seed.

9. A method to promote growth of plants on agricultural fields which comprises applying particulate granular pyrolytic carbon having a density of 1.6 to 2.3 g/cc, a specific surface area of 0.001 to 5 m2/g measured by Hg porosimetry, a particle size of 0.3 mm d10 to 8 mm d90 and a carbon content of 95 to 100 weight-% on the agricultural fields.

10. A method according to claim 9, wherein the granular pyrolytic carbon is spread on the agricultural fields in quantity ranging from 0.5 to 500 tons per ha.

11. A method according to claim 9 or 10, wherein the initially thickness of granular pyrolytic carbon layer on the agricultural fields is in the range of 1 mm to 50 mm.

12. Use of granular pyrolytic carbon having a density of 1.6 to 2.3 g/cc, a specific surface area of 0.001 to 5 m2/g measured by Hg porosimetry, a particle size of 0.3 mm d10 to 8 mm d90 and a carbon content of 95 to 100 weight-% as soil conditioner for agricultural fields and/or gardening.

13. A use according to claim 12, wherein granular pyrolytic carbon is used as soil conditioner in addition to mulch seed.

## Patentansprüche

1. Bodenkonditionierungssubstrat, enthaltend granulatförmigen pyrolytischen Kohlenstoff mit einer Dichte von 1,6 bis 2,3 g/cm3, einer spezifischen Oberfläche von 0,001 bis 5 m2/g, gemessen durch Hg-Porosimetrie, einer Teilchengröße von 0,3 mm d10 bis 8 mm d90 und einem Kohlenstoffgehalt von 95 bis 100 Gew.-%.

2. Bodenkonditionierungssubstrat nach Anspruch 1, wobei der granulatförmige pyrolytische Kohlenstoff eine Dichte von 1,8 bis 2,2 g/cm3 aufweist.

3. Bodenkonditionierungssubstrat nach Anspruch 1 oder 2, wobei der granulatförmige pyrolytische Kohlenstoff eine spezifische Oberfläche im Bereich von 0,01 bis 2 m2/g, gemessen durch Hg-Porosimetrie, aufweist.

4. Bodenkonditionierungssubstrat nach mindestens einem der Ansprüche 1 bis 3, wobei der granulatförmige pyrolytische Kohlenstoff eine Schüttdichte von 0,5 bis 1,5 g/cm3 aufweist.

5. Bodenkonditionierungssubstrat nach mindestens einem der Ansprüche 1 bis 4, wobei die Fraktion der Teilchengröße unter 5 µm höchstens 10 ppm nach Gewicht beträgt.

6. Bodenkonditionierungssubstrat nach mindestens einem der Ansprüche 1 bis 5, wobei es sich bei dem granulatförmigen pyrolytischen Kohlenstoff um ein hydrophobes Material mit einem Wassertröpfchenkontaktwinkel von mehr als 70 handelt.

7. Bodenkonditionierungssubstrat nach mindestens einem der Ansprüche 1 bis 6, wobei das Substrat verschiedene organische oder anorganische Additive, z. B. agrochemische Wirkstoffe aus der Gruppe der Fungizide, Bakterizide, Herbizide und/oder Pflanzenwachstumsregulatoren, trägt.

8. Bodenkonditionierungssubstrat nach mindestens einem der Ansprüche 1 bis 7, das Mulchsaat enthält.

9. Verfahren zur Förderung des Wachstums von Pflanzen auf landwirtschaftlichen Feldern, bei dem man einen teilchenförmigen granulatförmigen pyrolytischen Kohlenstoff mit einer Dichte von 1,6 bis 2,3 g/cm3, einer spezifischen Oberfläche von 0,001 bis 5 m2/g, gemessen durch Hg-Porosimetrie, einer Teilchengröße von 0,3 mm d10 bis 8 mm d90 und einem Kohlenstoffgehalt von 95 bis 100 Gew.-% auf die landwirtschaftlichen Felder ausbringt.

10. Verfahren nach Anspruch 9, bei dem man den granulatförmigen pyrolytischen Kohlenstoff in einer Menge von 0,5 bis 500 Tonnen pro ha auf den landwirtschaftlichen Feldern ausbringt.

11. Verfahren nach Anspruch 9 oder 10, bei dem die ursprüngliche Dicke der Schicht des granulatförmigen pyrolytischen Kohlenstoffs auf den landwirtschaftlichen Feldern im Bereich von 1 mm bis 50 mm liegt.

12. Verwendung von granulatförmigen pyrolytischen Kohlenstoff mit einer Dichte von 1,6 bis 2,3 g/cm3, einer spezifischen Oberfläche von 0,001 bis 5 m2/g, gemessen durch Hg-Porosimetrie, einer Teilchengröße von 0,3 mm d10 bis 8 mm d90 und einem Kohlenstoffgehalt von 95 bis 100 Gew.-% als Bodenkonditionierer für landwirtschaftliche Felder und/oder Gartenarbeit.

13. Verwendung nach Anspruch 12, wobei der granulatförmige pyrolytische Kohlenstoff als Bodenkonditionierer zusätzlich zu Mulchsaat verwendet wird.

## Revendications

1. Substrat de conditionnement du sol contenant du carbone pyrolytique granulaire d'une densité de 1,6 à 2,3 g/cc, d'une surface spécifique de 0,001 à 5 m2 g/g mesurée par porosimétrie Hg, d'une taille de particules de 0,3 mm d10 à 8 mm d90 et d'une teneur en carbone de 95 à 100 % en poids.

2. Substrat de conditionnement du sol selon la revendication 1, dans lequel le carbone pyrolytique granulaire a une densité de 1,8 à 2,2 g/cc.

3. Substrat de conditionnement du sol selon la revendication 1 ou 2, dans lequel le carbone pyrolytique granulaire a une surface spécifique dans la plage de 0,01 à 2 m2/g mesurée par porosimétrie Hg.

4. Substrat de conditionnement du sol selon au moins l'une des revendications 1 à 3, dans lequel le carbone pyrolytique granulaire a une densité en vrac de 0,5 à 1,5 g/cc.

5. Substrat de conditionnement du sol selon au moins l'une des revendications 1 à 4, dans lequel la fraction de taille de particules inférieure à 5 um est d'au plus de 10 ppm en poids.

6. Substrat de conditionnement du sol selon au moins l'une des revendications 1 à 5, dans lequel le carbone pyrolytique granulaire est un matériau hydrophobe doté d'un angle de contact de gouttelettes d'eau supérieur à 70.

7. Substrat de conditionnement du sol selon au moins l'une des revendications 1 à 6, dans lequel le substrat supporte différents additifs organiques ou inorganiques, par exemple une substance active agrochimique du groupe des fongicides, bactéricides, herbicides et/ou des régulateurs de croissance végétale.

8. Substrat de conditionnement du sol selon au moins l'une des revendications 1 à 7 contenant des graines de paillis.

9. Procédé de promotion de la croissance de végétaux sur les champs agricoles qui comprend l'application de carbone pyrolytique granulaire particulaire ayant une densité de 1,6 à 2,3 g/cc, une surface spécifique de 0,001 à 5 m2/g mesurée par porosimétrie Hg, une taille de particules de 0,3 mm d10 à 8 mm d90 et une teneur en carbone de 95 à 100 % en poids sur les champs agricoles.

10. Procédé selon la revendication 9, dans lequel le carbone pyrolytique granulaire est réparti sur les champs agricoles en une quantité allant de 0,5 à 500 tonnes par ha.

11. Procédé selon la revendication 9 ou 10, dans lequel l'épaisseur initiale de couche de carbone pyrolytique granulaire sur les champs agricoles est dans la plage de 1 mm à 50 mm.

12. Utilisation de carbone pyrolytique granulaire ayant une densité de 1,6 à 2,3 g/cc, une surface spécifique de 0,001 à 5 m2/g mesurée par porosimétrie Hg, une taille de particules de 0,3 mm d10 à 8 mm d90 et une teneur en carbone de 95 à 100 % en poids en tant que conditionneur de sol pour les champs agricoles et/ou le jardinage.

13. Utilisation selon la revendication 12, dans laquelle le carbone pyrolytique granulaire est utilisé comme conditionneur de sol en plus des graines de paillis.
